# EUROPÄISCHE PATENTSCHRIFT

(11) **EP 1 851 600 B1**
(45) Veröffentlichungstag und Bekanntmachung des Hinweises auf die Patenterteilung: **21.05.2008**
(21) Anmeldenummer: 05819363.2
(22) Anmeldetag: 06.12.2005
(51) Int. Cl.: G05D 7/01, F15D 1/00, F15D 1/08, F15D 1/14, G05D 16/04

(54) **VORRICHTUNG UND VERFAHREN ZUR REGELUNG EINES DRUCKES UND/ODER EINES VOLUMENSTROMES EINER FLÜSSIGKEIT**
DEVICE AND METHOD FOR REGULATING THE PRESSURE AND/OR VOLUME FLOW OF A LIQUID
PROCEDE ET DISPOSITIF POUR REGLER LA PRESSION ET/OU L'ECOULEMENT D'UN VOLUME D'UN LIQUIDE

(30) Priorität: 09.02.2005 DE 102005005762
(43) Veröffentlichungstag der Anmeldung: 07.11.2007
(73) Patentinhaber: ROBERT BOSCH GMBH, 70442 Stuttgart (DE)
(72) Erfinder: IBEN, Uwe, 70839 Gerlingen (DE); HABR, Klaus, 70435 Stuttgart (DE)
(86) Internationale Anmeldenummer: PCT/EP2005/056512
(87) Internationale Veröffentlichungsnummer: WO 2006/084515

(56) Entgegenhaltungen:
- EP-A- 0 757 184
- WO-A-20/04106792
- DE-A1- 2 040 575
- DE-A1- 2 658 619
- US-A- 3 324 891
- US-A- 4 679 595

## Beschreibung

### Stand der Technik

Die vorliegende Erfindung betrifft ein Druckregelventil zum Regeln eines Druckes und/oder eines Volumenstroms einer Flüssigkeit. Ferner betrifft die vorliegende Erfindung ein Verfahren zur Regelung eines Druckes und/oder eines Volumenstromes.

Druckregelventile sowie Verfahren zur Regelung eines Druckes sind aus dem Stand der Technik in unterschiedlichen Ausgestaltungen bekannt. Die bekannten Druckregelventile verwenden dabei als Wirkprinzip eine gesteuerte bzw. geregelte Veränderung der strömungsrelevanten Geometrie. Dies wird durch einen Schließkörper, wie beispielsweise einen Steuerkolben, eine Kugel-Kegelsitz-Konfiguration oder einen Schieber realisiert. Den bekannten Druckregelventilen ist dabei gemeinsam, dass der Schließkörper bewegt wird, um den Regelvorgang durchzuführen. Abhängig vom zurückgelegten Weg des Schließkörpers wird die Größe des freigegebenen Durchlasses bestimmt und damit der Druck bzw. der Volumenstrom. Neben den bewegten Schließkörpern und insbesondere bei hohen Drücken auftretenden Dichtungsproblemen kann es bei den bekannten Druckregelventilen auch zu unerwünschten Druckpulsationen insbesondere beim Öffnen und Schließen des Druckregelventils kommen.

In den Schriften US-A-3324891, DE 26 58 619 A1, US-A-4679595, DE 20 40 575 A1 und WO 2004/106792 A werden Vorrichtungen zur Regelung von Druck oder Volumenstrom beschrieben. Hier werden aber weder Staueinrichtungen noch ein Kavitationsraum bzw. ein Kavitationsgebiet offenbart. In der EP-A-0757184 wird zwar ein Kavitationsraum offenbart, aber keine Staueinrichtung. In kleiner dieser Schriften wird eine Vorrichtung bzw. ein Verfahren beschrieben, bei der bzw. dem eine Flüssigkeit zwischen einem Kavitationsbereich und einem Staudruckbereich zu einer Auslassöffnung strömt.

### Vorteile der Erfindung

Die erfindungsgemäße Vorrichtung zum Regeln eines Druckes und/oder eines Volumenstromes einer Flüssigkeit weist demgegenüber den Vorteil auf, dass sie keine bewegten Teile wie einen Schließkörper oder Ähnliches aufweist. Dadurch kann eine wartungsfreie Druckregelvorrichtung bereitgestellt werden, welche eine lange Lebensdauer aufweist. Ferner weist die erfindungsgemäße Vorrichtung zum Regeln eines Drucks und/oder eines Volumenstroms keine Beschränkung hinsichtlich ihrer Dynamik auf. Hierdurch kann das Auftreten von Druckpulsationen während eines Regelvorgangs verhindert werden. Die erfindungsgemäße Vorrichtung verwendet dabei als Wirkprinzip das Kavitationsphänomen und kommt ohne bewegten Schließkörper aus. Erfindungsgemäß wird zur Regelung somit bewusst ein Zwei-Phasen-Fluid, d.h. ein Fluid mit flüssiger und gasförmiger Phase, in einem Kavitationsraum erzeugt, welcher zur Regelung des Drucks und/oder des Volumenstroms verwendet wird. Im Kavitationsraum ist hierbei wenigstens eine Auslassöffnung angeordnet, wobei die zu regelnde Flüssigkeit zwischen dem bewusst erzeugten Kavitationsgebiet und einem Staudruckgebiet zur Auslassöffnung strömt. Der Regelungsvorgang kann dabei durch Änderung des Staudruckgebiets und/oder Änderung des Kavitationsgebiets erfolgen.

Die Unteransprüche zeigen bevorzugte Weiterbildungen der Erfindung.

Vorzugsweise ist der Kavitationsraum in Strömungsrichtung nach einer Drossel angeordnet. Die Drossel ist besonders bevorzugt hinsichtlich des Drosselquerschnitts veränderbar. Dadurch kann durch Veränderung des Drosselquerschnitts ein Grundregeldruck eingestellt werden.

Weiter bevorzugt ist die Staueinrichtung im Kavitationsraum als gewölbter Bereich und insbesondere als Kugelabschnitt ausgebildet. Dadurch kann ein symmetrischer, kegelförmiger Staudruckbereich erzeugt werden.

Weiter bevorzugt ist ein Freistrahl der Flüssigkeit auf eine Mitte der Staueinrichtung ausgerichtet.

Gemäß einer bevorzugten Ausgestaltung der Erfindung umfasst der Kavitationsbereich wenigstens einen Wirbel mit einer Scherschichtkavitation. Besonders bevorzugt umfasst der Kavitationsbereich zwei Wirbel, welche insbesondere zu dem Freistrahl der Flüssigkeit symmetrisch angeordnet sind.

Besonders bevorzugt sind im Kavitationsraum mehrere Auslassöffnungen vorgesehen, welche insbesondere symmetrisch zur Freistrahl und/oder symmetrisch zur Staueinrichtung angeordnet sind.

Das erfindungsgemäße Verfahren zur Regelung eines Druckes und/oder eines Volumenstroms einer Flüssigkeit verwendet zur Regelung das Kavitationsphänomen und erzeugt bewusst eine Kavitation. Hierbei wird die zu regelnde Flüssigkeit derart in einen Kavitationsraum zugeführt, dass ein Kavitationsbereich und ein Staudruckbereich in dem Kavitationsraum erzeugt wird. Im Kavitationsraum ist eine Auslassöffnung vorgesehen, wobei die Flüssigkeit zwischen dem Kavitationsbereich und dem Staudruckbereich zur Auslassöffnung strömt. Das erfindungsgemäße Verfahren führt den Regelvorgang dabei durch Veränderung der Position des Kavitationsbereichs und/oder des Staudruckbereichs durch und/oder durch eine Vergrößerung oder Verkleinerung des Kavitationsbereichs und/oder des Staudruckbereichs durch. Somit kann auf einen bewegten Schließkörper wie im Stand der Technik verzichtet werden und eine höhere Regelfrequenz ermöglicht werden.

Vorzugsweise liefert das erfindungsgemäße Verfahren mit einem steigenden Volumenstrom einen fallenden Strömungsverlust. Dies wird durch das erfindungsgemäße Verfahren dadurch erreicht, dass durch die Vergrößerung des Volumenstromes der Staudruckbereich vergrößert wird und zu einer Verschiebung des Kavitationsbereichs führt. Die Verschiebung des Kavitationsbereichs wird dabei derart vorgenommen, dass der Kavitationsbereich etwas von einer Auslassöffnung im Kavitationsraum verdrängt wird. Dadurch kann die zur Auslassöffnung strömende Flüssigkeit mit einer geringeren Behinderung durch den Kavitationsbereich zur Auslassöffnung strömen, so dass die Strömungsverluste verringert werden und ein größerer Volumenstrom aus der Auslassöffnung austritt.

Besonders bevorzugt wird ein Grundregeldruck mittels einer verstellbaren Drossel, welche in Strömungsrichtung vor dem Kavitationsraum angeordnet ist, eingestellt.

Weiter bevorzugt werden im Kavitationsraum zwei Kavitationsbereiche erzeugt, welche insbesondere als Wirbel ausgebildet sind und insbesondere zu einem Freistrahl symmetrisch sind.

Die vorliegende Erfindung wird insbesondere in Fahrzeugen verwendet. Hierbei ist eine Verwendung bei Kraftstoffeinspritzsystemen, wie beispielsweise Common-Rail-Systemen oder Direkteinspritz-Systemen möglich. Ferner kann die vorliegende Erfindung in hydraulischen Anwendungen in Fahrzeugen, beispielsweise in Bremssystemen verwendet werden. Hierbei kann einerseits ein hydraulisches Regelkonzept realisiert werden und andererseits auch eine Pulsationsdämpfung verwirklicht werden.

### Zeichnung

Nachfolgend wird ein Ausführungsbeispiel anhand der begleitenden Zeichnung beschrieben. In der Zeichnung ist:
- Figur 1: eine schematische Schnittansicht einer Vorrichtung zur Regelung eines Druckes und/oder eines Volumenstroms gemäß einem ersten Ausführungsbeispiel der vorliegenden Erfindung bei einem ersten Volumenstrom,
- Figur 2: eine schematische Schnittansicht der in Figur 1 gezeigten Vorrichtung bei einem zweiten Volumenstrom, welcher größer als der erste Volumenstrom ist, und
- Figur 3: ein Diagramm, welches eine Kennlinie einer Druckregelung einer erfindungsgemäßen Vorrichtung zeigt.

### Beschreibung des Ausführungsbeispiels

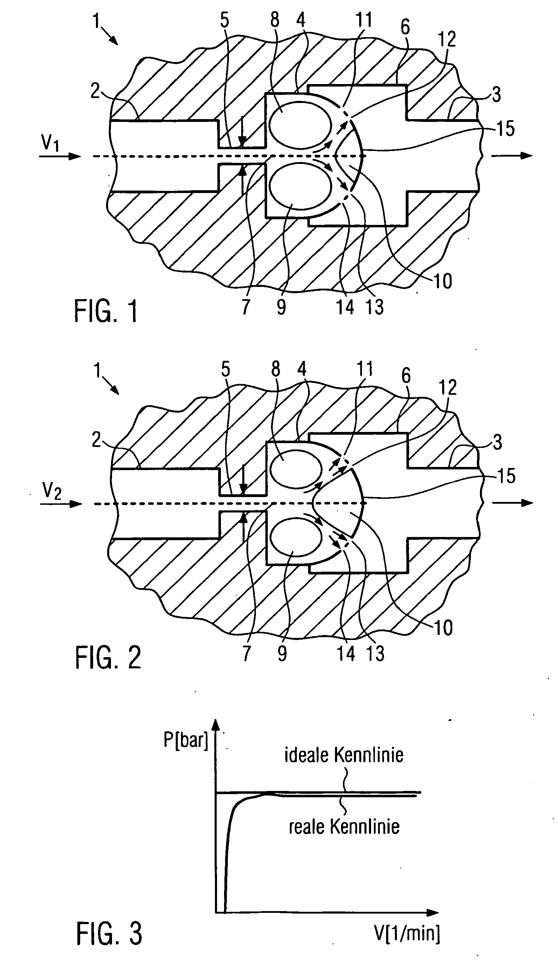

Nachfolgend wird unter Bezugnahme auf die Figuren 1 bis 3 ein Ausführungsbeispiel der Erfindung im Detail beschrieben.

Figur 1 zeigt eine Vorrichtung 1 zum Regeln eines Drucks und/oder eines Volumenstroms V₁ einer Flüssigkeit. Die Vorrichtung 1 umfasst eine Zufuhrleitung 2, eine Abführungsleitung 3 und einen Kavitationsraum 4. In Strömungsrichtung vor dem Kavitationsraum 4 ist eine einstellbare Drossel 5 angeordnet. Die Pfeile an der Drossel 5 sollen einen veränderlichen Drosselquerschnitt andeuten. Im Kavitationsraum 4 in Strömungsrichtung nachgeordnet ist ein Übergangsbereich 6, welcher in die Abführungsleitung 3 übergeht.

Der Kavitationsraum 4 umfasst eine Vielzahl von Auslassöffnungen 11, 12, 13, 14. Die Auslassöffnungen 11, 12, 13, 14 sind symmetrisch zu einem Freistrahl 7 angeordnet. Der Freistrahl 7 bildet sich insbesondere nach der durch die Drossel 5 bereitgestellten Querschnittsverengung aus. Der Kavitationsraum 4 umfasst ferner eine Staueinrichtung 15, welche in diesem Ausführungsbeispiel ein Staublech ist. Die Staueinrichtung 15 weist dabei eine im Wesentlichen Kugelabschnittsform auf und ist ebenfalls symmetrisch zum Freistrahl 7 ausgebildet. Der Freistrahl 7 trifft somit, wie in Figur 1 gezeigt, in die Mitte der Staueinrichtung 15. Dadurch wird im Kavitationsraum 4 ein Staudruckbereich 10 ausgebildet. Der Staudruckbereich 10 wird hierbei ebenfalls symmetrisch zum Freistrahl 7 ausgebildet und weist eine im Wesentlichen kegelförmige Form auf. Die Auslassöffnungen sind auch symmetrisch zur Staueinrichtung 15 angeordnet.

Aufgrund der Strömungsverhältnisse im Kavitationsraum 4 bilden sich im Kavitationsraum 4 weiterhin ein erster Kavitationsbereich 8 und ein zweiter Kavitationsbereich 9 aus. Die beiden Kavitationsbereiche 8, 9 sind ebenfalls symmetrisch zum Freistrahl 7 ausgebildet. Die Kavitationsbereiche 8, 9 sind zwei sich ausbildende Wirbel, welche eine Scherschichtkavitation verursachen. Dadurch ist im Kavitationsraum 4 teilweise ein Zwei-Phasen-Gemisch vorhanden. Hierbei sei angemerkt, dass bei einer Zwei-Phasen-Strömung die strömungsmechanischen Verluste wesentlich höher als bei einer einphasigen Strömung sind.

In Figur 1 sind die Strömungsverhältnisse schematisch durch die im Kavitationsraum 4 eingezeichneten kleinen Pfeile dargestellt. Wie aus Figur 1 ersichtlich ist, bewirkt der Staudruckbereich 10, dass die Flüssigkeit zwischen dem ersten Kavitationsbereich 8 und dem Staudruckbereich 10 zur Auslassöffnung 12 strömt und zwischen dem zweiten Kavitationsbereich 9 und dem Staudruckbereich 10 zur Auslassöffnung 13 strömt. Die Auslassöffnungen 11 bzw. 14 sind dabei teilweise vom ersten Kavitationsbereich 8 bzw. dem zweiten Kavitationsbereich 9 überdeckt, so dass durch diese beiden Auslassöffnungen 11, 14 kaum Flüssigkeit in den Übergangsbereich 6 austritt.

Somit wird durch die erfindungsgemäße Vorrichtung 1 ein Druck und/oder Volumenstrom der zugeführten Flüssigkeit durch bewusstes Erzeugen von Kavitation im Kavitationsraum 4 geregelt. Durch die variable Drossel 5 kann dabei ferner ein Grundregeldruck eingestellt werden. Weiterhin hat eine Querschnittsveränderung im Bereich der Drossel 5 auch Auswirkungen auf die Größe der beiden Kavitationsbereiche 8, 9 sowie den Staudruckbereich 10. Auch hierdurch kann eine Regelung der Flüssigkeit durchgeführt werden. Die erfindungsgemäße Vorrichtung kann dabei auf bewegte Teile, wie z.B. Schließkörper oder Ähnliches, verzichten.

Figur 2 zeigt die in Figur 1 dargestellte Vorrichtung mit dem Unterschied, dass ein Volumenstrom V₂ zugeführt wird, welcher deutlich größer als der in Figur 1 dargestellte Volumenstrom V₁ ist. Durch den größeren Volumenstrom V₂ bildet sich, wie in Figur 2 gezeigt, ein größerer Staudruckbereich 10 vor der Staueinrichtung 15 im Kavitationsraum 4 aus. Dadurch wird der erste Kavitationsbereich 8 und der zweite Kavitationsbereich 9 etwas entgegen der Strömungsrichtung zur Drossel 5 hin verdrängt. Ferner sind die beiden Kavitationsbereiche 8, 9 etwas kleiner als bei einem geringeren Volumenstrom. Durch diese Maßnahme werden die beiden Kavitationsbereiche 8, 9 auch von den Auslassöffnungen 11 bzw. 14 verdrängt, so dass die Flüssigkeit nicht wie im ersten Ausführungsbeispiel nur durch die Auslassöffnungen 12 und 13 ausströmen kann, sondern durch alle vier Auslassöffnungen 11, 12, 13, 14 ausströmen kann. Dies ist in Figur 2 durch die im Kavitationsraum 4 dargestellten kleinen Pfeile verdeutlicht. Somit kann durch einen vergrößerten Volumenstrom (V₂) ein Strömungsverlust im Kavitationsraum reduziert werden, wodurch ebenfalls eine Druckregelventil-Funktion und eine Volumenstrom-Änderungsfunktion bereitgestellt werden kann.

Wenn der Volumenstrom V₂ noch weiter gesteigert würde, kann der Staudruckbereich 10 dabei so groß werden, dass die beiden benachbart zum Staudruckbereiche 10 angeordneten Auslassöffnungen 12, 13 teilweise oder vollständig vom Staudruckbereich abgedeckt werden könnten. Auch dadurch kann eine weitere Regelfunktion der Vorrichtung 1 hinsichtlich des Drucks und/oder des Volumenstroms erfolgen.

Figur 3 stellt ein Diagramm des Druckes p über dem Volumenstrom V dar. Hierbei ist eine ideale Kennlinie eines Druckregelventils und eine reale Kennlinie einer erfindungsgemäßen Vorrichtung 1 dargestellt. Wie aus Figur 3 ersichtlich ist, besitzt die reale Kennlinie bis auf den Anfangsbereich die gleiche Funktionalität wie eine ideale Kennlinie eines üblichen Druckregelventils. Dies liegt insbesondere darin begründet, dass für die Funktion der Vorrichtung 1 eine ständige Strömung vorhanden sein muss, um insbesondere die Kavitationsbereiche 8, 9 im Kavitationsraum 4 zu erzeugen. Hierbei sei angemerkt, dass grundsätzlich eine vollständige Absperrfunktion mit der erfindungsgemäßen Vorrichtung allein nicht möglich ist. Die Absperrfunktion muss beispielsweise durch ein vollständiges Schließen der variablen Drossel 5 oder ein zusätzliches Absperrelement erfolgen. Für die Funktion der erfindungsgemäßen Vorrichtung 1 bzw. des erfindungsgemäßen Verfahrens ist es dagegen notwendig, dass eine ständige Strömung der Flüssigkeit in einem gewissen Umfang vorhanden ist.

Durch den Wegfall von bewegten Bauteilen weist die erfindungsgemäße Vorrichtung jedoch keinerlei Beschränkung hinsichtlich ihrer Dynamik auf. Ferner können auch Druckpulsationen während des Regelungsvorgangs vermieden werden.

Um mögliche Kavitationsschäden durch die bewusste Erzeugung der Kavitationsbereiche 8, 9 am Kavitationsraum 4 zu vermeiden, ist der Kavitationsraum 4 vorzugsweise derart ausgebildet, dass die Kavitationsbereiche etwas von den Wänden des Kavitationsraumes beabstandet sind.

Die erfindungsgemäße Vorrichtung 1 wird vorzugsweise in Fahrzeugen, insbesondere bei der Kraftstoffeinspritzung oder in Hydrauliksystemen, wie z.B. Bremseinrichtungen oder Getriebeeinrichtungen, verwendet.

## Patentansprüche

1. Vorrichtung zum Regeln eines Drucks und/oder eines Volumenstroms einer Flüssigkeit, umfassend einen Kavitationsraum (4) mit einer Staueinrichtung (15), um einen Staudruckbereich (10) zu erzeugen, und mindestens einer Auslassöffnung (11, 12, 13, 14) für einen Austritt der Flüssigkeit aus dem Kavitationsraum (4), wobei in dem Kavitationsraum (4) wenigstens ein Kavitationsbereich (8, 9) erzeugbar ist, und wobei die Auslassöffnung (11, 12, 13, 14) derart angeordnet ist, dass die Flüssigkeit zwischen dem Kavitationsbereich (8, 9) und dem Staudruckbereich (10) zur Auslassöffnung (11, 12, 13, 14) strömt.

2. Vorrichtung nach Anspruch 1, **gekennzeichnet durch** eine Drosseleinrichtung (5), wobei die Drosseleinrichtung (5) in Strömungsrichtung der Flüssigkeit vor dem Kavitationsraum (4) angeordnet ist.

3. Vorrichtung nach Anspruch 2, **dadurch gekennzeichnet, dass** die Drosseleinrichtung (5) einen veränderbaren Strömungsquerschnitt aufweist.

4. Vorrichtung nach einem der vorhergehenden Ansprüche, **dadurch gekennzeichnet, dass** die Staueinrichtung (15) als gewölbter Bereich, insbesondere als Kugelabschnitt, ausgebildet ist.

5. Vorrichtung nach einem der vorhergehenden Ansprüche, **dadurch gekennzeichnet, dass** ein Freistrahl (7) der Flüssigkeit auf eine Mitte der Staueinrichtung (15) ausgerichtet ist.

6. Vorrichtung nach einem der vorhergehenden Ansprüche, **dadurch gekennzeichnet, dass** der Kavitationsbereich (8, 9) einen Wirbel mit einer Scherschichtkavitation umfasst.

7. Vorrichtung nach Anspruch 6, **dadurch gekennzeichnet, dass** der Kavitationsbereich (8, 9) zwei Wirbel umfasst, welche insbesondere zum Freistrahl (7) symmetrisch angeordnet sind.

8. Vorrichtung nach einem der vorhergehenden Ansprüche, **dadurch gekennzeichnet, dass** im Kavitationsraum (4) eine Vielzahl von Auslassöffnungen (11, 12, 13, 14) angeordnet ist, welche insbesondere symmetrisch zum Freistrahl (7) angeordnet sind.

9. Verfahren zur Regelung eines Druckes und/oder eines Volumenstromes einer Flüssigkeit, umfassend den Schritt des Zuführens der Flüssigkeit in einen Kavitationsraum (4) derart, dass ein Staudruckbereich (10) und wenigstens ein Kavitationsbereich (8, 9) im Kavitationsraum (4) gebildet wird, wobei der Kavitationsraum (4) wenigstens eine Auslassöffnung (11, 12, 13, 14) umfasst, durch welche die dem Kavitationsraum (4) zugeführte Flüssigkeit abführbar ist, wobei die Flüssigkeit zwischen dem Kavitationsbereich (8, 9) und dem Staudruckbereich (10) zur Auslassöffnung (11, 12, 13, 14) strömt und der Regelungsvorgang durch Änderung der Größe und/oder der Position des Kavitationsbereichs (8, 9) und/oder der Größe und/oder der Position des Staudruckbereichs (10) erfolgt.

10. Verfahren nach Anspruch 9, **dadurch gekennzeichnet, dass** der Staudruckbereich (10) bei einer Vergrößerung des Volumenstromes der zugeführten Flüssigkeit größer wird und der vergrößerte Staudruckbereich (10) den Kavitationsbereich (8, 9) von der Auslassöffnung (11, 12, 13, 14) zumindest teilweise verdrängt.

11. Verfahren nach Anspruch 9 oder 10, **dadurch gekennzeichnet, dass** ein Grundregeldruck mittels einer verstellbaren Drosseleinrichtung (5), welche in Strömungsrichtung vor dem Kavitationsraum (4) angeordnet ist, einstellbar ist.

12. Verfahren nach einem der Ansprüche 9 bis 11, **dadurch gekennzeichnet, dass** im Kavitationsraum (4) wenigstens zwei Kavitationsbereiche (8, 9) erzeugt werden, welche zu einem Freistrahl (7) der Flüssigkeit symmetrisch sind.

13. Verfahren nach einem der Ansprüche 9 bis 12, **dadurch gekennzeichnet, dass** der Staudruckbereich (10) symmetrisch zum Freistrahl (7) erzeugt wird.

## Claims

1. Device for regulating a pressure and/or a volume flow of a liquid, comprising a cavitation space (4) with a retaining device (15) in order to generate a dynamic pressure region (10), and at least one outlet opening (11, 12, 13, 14) for the liquid to be discharged from the cavitation space (4), wherein at least one cavitation region (8, 9) can be generated in the cavitation space (4), and wherein the outlet opening (11, 12, 13, 14) is arranged in such a way that the liquid flows between the cavitation region (8, 9) and the dynamic pressure region (10) to the outlet opening (11, 12, 13, 14).

2. Device according to Claim 1, **characterized by** a throttling device (5), wherein the throttling device (5) is arranged upstream of the cavitation space (4) in the direction of flow of the liquid.

3. Device according to Claim 2, **characterized in that** the throttling device (5) has a variable flow cross section.

4. Device according to one of the preceding claims, **characterized in that** the retaining device (15) is embodied as a curved region, in particular as a spherical section.

5. Device according to one of the preceding claims, **characterized in that** a free jet (7) of the liquid is aimed at a centre of the retaining device (15).

6. Device according to one of the preceding claims, **characterized in that** the cavitation region (8, 9) comprises an eddy with a shearing layer cavitation.

7. Device according to Claim 6, **characterized in that** the cavitation region (8, 9) comprises two eddies which, in particular, are arranged symmetrically with respect to the free jet (7).

8. Device according to one of the preceding claims, **characterized in that** a plurality of outlet openings (11, 12, 13, 14) which, in particular, are arranged symmetrically with respect to the free jet (7), is arranged in the cavitation space (4).

9. Method for regulating a pressure and/or a volume flow of a liquid, comprising the step of feeding the liquid into a cavitation space (4) in such a way that a dynamic pressure region (10) and at least one cavitation region (8, 9) are formed in the cavitation space (4), wherein the cavitation space (4) comprises at least one outlet opening (11, 12, 13, 14) through which the liquid which is fed to the cavitation space (4) can be carried away, wherein the liquid flows between the cavitation region (8, 9) and the dynamic pressure region (10) to the outlet opening (11, 12, 13, 14), and the regulating process is carried out by changing the size and/or the position of the cavitation region (8, 9) and/or the size and/or the position of the dynamic pressure region (10).

10. Method according to Claim 9, **characterized in that** the dynamic pressure region (10) becomes larger when the volume flow of the liquid which is fed in is increased, and the enlarged dynamic pressure region (10) at least partially pushes the cavitation region (8, 9) away from the outlet opening (11, 12, 13, 14).

11. Method according to Claim 9 or 10, **characterized in that** a basic regulating pressure can be set by means of an adjustable throttling device (5) which is arranged upstream of the cavitation space (4) in the direction of flow.

12. Method according to one of Claims 9 to 11, **characterized in that** at least two cavitation regions (8, 9), which are symmetrical with respect to a free jet (7) of the liquid, are generated in the cavitation space (4).

13. Method according to one of Claims 9 to 12, **characterized in that** the dynamic pressure region (10) is generated symmetrically with respect to the free jet (7).

## Revendications

1. Dispositif pour réguler une pression et/ou un débit volumique d'un liquide, comprenant une chambre de cavitation (4) avec une installation de retenue (15) pour créer une zone de pression dynamique (10) et au moins un orifice de sortie (11, 12, 13, 14) pour la sortie du liquide hors de la chambre de cavitation (4),
on crée au moins une zone de cavitation (8, 9) dans la chambre de cavitation (4) et
l'orifice de sortie (11, 12, 13, 14) est disposé de façon que le liquide passe entre la zone de cavitation (8, 9) et la zone de pression dynamique (10) vers l'orifice de sortie (11, 12, 13, 14).

2. Dispositif selon la revendication 1,
**caractérisé par**
une installation d'étranglement (5),
l'installation d'étranglement (5) étant située en amont de la chambre de cavitation (4) selon la direction d'écoulement du liquide.

3. Dispositif selon la revendication 2,
**caractérisé en ce que**
l'installation d'étranglement (5) a une section d'écoulement variable.

4. Dispositif selon l'une des revendications précédentes,
**caractérisé en ce que**
l'installation de retenue (15) est une zone bombée, notamment en forme de calotte sphérique.

5. Dispositif selon l'une quelconque des revendications précédentes,
**caractérisé en ce qu'**
un jet libre (7) du liquide est dirigé vers le centre de l'installation de retenue (15).

6. Dispositif selon l'une des revendications précédentes,
**caractérisé en ce que**
la zone de cavitation (8, 9) comprend un tourbillon avec une cavitation à couche de cisaillement.

7. Dispositif selon la revendication 6,
**caractérisé en ce que**
la zone de cavitation (8, 9) comprend deux tourbillons symétriques, notamment par rapport au jet libre (7).

8. Dispositif selon l'une des revendications précédentes,
**caractérisé en ce que**
la chambre de cavitation (4) comporte un grand nombre d'orifices de sortie (11, 12, 13, 14) symétriques par rapport au jet libre (7).

9. Procédé de régulation d'une pression et/ou d'un débit volumique d'un liquide comprenant une étape de fourniture de liquide à une chambre de cavitation (4) de façon à former une zone de pression dynamique (10) et au moins une zone de cavitation (8, 9) dans la chambre de cavitation (4),
la chambre de cavitation (4) ayant au moins un orifice de sortie (11, 12, 13, 14) par lequel on évacue le liquide fourni à la chambre de cavitation (4),
le liquide s'écoulant entre la zone de cavitation (8, 9) et la zone de pression dynamique (10) vers l'orifice de sortie (11, 12, 13, 14) et l'opération de régulation se fait par variation de la taille et/ou de la position de la zone de cavitation (8, 9) et/ou de la taille et/ou de la position de la zone de pression dynamique (10).

10. Procédé selon la revendication 9,
**caractérisé en ce que**
la zone de pression dynamique (10) augmente lorsqu'on augmente le débit volumique du liquide fourni et
l'augmentation de la zone de pression dynamique (10) refoule au moins en partie la zone de cavitation (8, 9) par rapport à l'orifice de sortie (11, 12, 13, 14).

11. Procédé selon la revendication 9 ou 10,
**caractérisé en ce qu'**
on règle une pression de régulation de base à l'aide d'une installation d'étranglement (5) réglable installée dans la direction découlement en amont de la chambre de cavitation (4).

12. Procédé selon l'une des revendications 9 à 11,
**caractérisé en ce qu'**
on génère au moins deux zones de cavitation (8, 9) dans la chambre de cavitation (4), ces zones étant symétriques par rapport à un jet libre (7) de liquide.

13. Procédé selon l'une des revendications 9 à 12,
**caractérisé en ce qu'**on génère la zone de pression dynamique (10) de façon symétrique par rapport au jet libre (7).
